# EUROPÄISCHE PATENTANMELDUNG

(11) **EP 2 966 255 A2**
(43) Veröffentlichungstag der Anmeldung: **13.01.2016**
(21) Anmeldenummer: 15001968.5
(22) Anmeldetag: 02.07.2015
(51) Int. Cl.: E21B 28/00, C09K 8/62, E21B 41/00, E21B 43/16, E21B 43/26

(54) **VERFAHREN ZUR FÖRDERUNG VON ERDÖL- UND/ODER ERDGAS, INSBESONDERE MITTELS FRACCING ODER EOR**

(30) Priorität: 08.07.2014 DE 102014010105
(71) Anmelder: Linde Aktiengesellschaft, 80331 München (DE)
(72) Erfinder: Guzmann, Marcus, 82541 Münsing (DE)
(74) Vertreter: Kasseckert, Rainer

(57) **Zusammenfassung**

Die Erfindung betrifft ein Verfahren zur Förderung eines fluiden Mediums (M), insbesondere Erdöl und/oder Erdgas, aus einer Lagerstätte (80), wobei ein Schaum (S) erzeugt wird, indem eine flüssige Phase (F) sowie ein gasförmige Phase (G) durch eine Düsenanordnung (1) geführt werden, wobei die flüssige Phase in der Düsenanordnung mit einem Schwingungserreger in Schwingung versetzt wird, und wobei der erzeugte Schaum in die Lagerstätte injiziert wird und jenes Medium (M) zumindest teilweise aus der Lagerstätte (80) heraus gefördert wird.

## Beschreibung

Die Erfindung betrifft ein Verfahren zur Förderung eines fluiden (d.h. flüssigen und/oder gasförmigen Mediums), insbesondere Erdöl und/oder Erdgas, aus einer unterirdischen Lagerstätte, wobei ein Schaum erzeugt wird, und wobei der erzeugte Schaum in die Lagerstätte injiziert wird und jenes Medium zumindest teilweise aus der Lagerstätte heraus gefördert wird.

Es ist bekannt, dass bei der Produktion von Erdöl, Kondensat (hierbei handelt es sich um Gaskondensate mit einer relativen Dichte im Bereich von 0,5 bis 0,8, die Kohlenwasserstoffe, wie z.B. Propan, Butan, Pentan, Hexan, etc., aufweisen sowie ggf. zusätzliche Verunreinigungen, wie z.B. lineare Alkane bis C12, zyklische Kohlenwasserstoffe und Aromaten) oder Erdgas aus entsprechenden Lagerstätten zur Aufrechterhaltung des Druckes Gase injiziert werden. Diese Gase können Stickstoff (N₂), Kohledioxid (CO₂), Erdgas oder Rauchgas sein. Das injizierte Gas hat im Vergleich zu den in der Lagerstätte enthaltenen Fluiden Erdöl oder Kondensat eine deutlich niedrigere Viskosität, was dazu führt, dass es aufgrund des sogenannten "Viscous Fingering" zu einer ungleichmäßigen Penetration in der Lagerstätte und weiterhin zu einem schnellen Durchbruch des in eine Injektionsbohrung injizierten Gases zu einer entfernten Produktionsbohrung (auch Förderbohrung genannt) kommt.

Um die Viskosität des Gases bzw. Flutmediums zu erhöhen, kann das Gas z.B. obertägig aufgeschäumt werden. Der Schaum wird dabei unter Verwendung von wässrigen Tensidlösungen am Bohrloch (z.B. Injektionsbohrung) gebildet. Diese Lösungen können ferner Schaumbildner und/oder Schaumstabilisatoren aufweisen (entweder gelöst oder auf Basis von Partikeln, insbesondere Nanopartikeln). Der Schaum kann alleine oder aber auch alternierend mit Wasser oder anderen (z.B. wasserbasierten) Fluiden in sogenannten "slugs" in die Lagerstätte gepumpt werden. Weiterhin besteht die Möglichkeit, dem Schaum ein Stützmittel beizugeben. Solche stützmittelhaltigen Fluide (die auch als Stützmittelflüssigkeit oder Frac Fluid bezeichnet werden) werden bei der hydraulischen Rissbildung (auch Hydraulic Fracturing oder kurz Fraccing genannt) mittels einer Anlage zur hydraulischen Rissbildung in eine Erdöl und/oder Erdgas enthaltenden Lagerstätte (z.B. in Form einer Gesteinsformation) gepresst. Im Gegensatz zur kontinuierlichen Injektion bei der EOR (siehe oben), wird beim Fracverfahren das Stützmittel in Intervallen über die Produktionsbohrung eingebracht. Auf diese Weise werden mittels der hydraulischen Rissbildung zusätzliche Durchgänge bzw. Risse in der Lagerstätte geschaffen, vorzugsweise in horizontaler Richtung, durch die Erdöl/Erdgas zu einer Förderbohrung strömen kann. Das Stützmittel, das auch als Frac Sand oder Proppant bezeichnet wird, verbleibt dabei in den erzeugten Rissen und hält diese offen. Andernfalls würden sich die erzeugten Risse aufgrund der herrschenden Druckverhältnisse wieder schließen. Ein Fracverfahren der vorgenannten Art ist z.B. in der WO2007098606A1 offenbart.

Bei dem Stützmittel kann es sich um natürliches oder synthetisches pulver- oder granulatartiges Material (wie z.B. Sand oder keramische Partikel) handeln. Verwendete Sandpartikel (Frac Sand) weisen in der Regel eine Dichte von etwa 2,85 g/cm³ auf. Leichtgewichtige Proppants liegen im Bereich von 1,57 g/cm³ bis 2,5 g/cm³. Keramische Proppants können z.B. Bauxit aufweisen (z.B. hergestellt durch Mahlung, Formgebung zu Pellets und insbesondere anschließendem Hochtemperatursintern).

Die heute angewandten Verfahren zur Schaumherstellung erzeugen jedoch nur sehr inhomogene Schäume. Sowohl die Blasengröße selbst als auch die Blasengrößenverteilung sind nicht oder nur in geringem Maße einstellbar.

Inhomogene Schäume können allerdings nur dann zum Einsatz kommen, wenn die Permeabilität der Lagerstätte dies auch zulässt. Je inhomogener die Blasengrößenverteilung ist und je mehr größere Blasen im Schaum enthalten sind, desto größer ist auch der notwendige Druckwiderstand, um den Schaum vom Injektionsbohrloch in die Lagerstätte (z.B. Gesteinsformation) zu verpressen. Damit ist die notwendige Verdichtung des eingesetzten Gases höher, was zu höherem Energieaufwand und damit erhöhten Kosten bei dem Prozess führt.

Im Hinblick auf Fraccing-Verfahren (siehe oben) definieren die Blasengröße und deren Verteilung die Tragkraft des Schaumes bezüglich der eingesetzten Proppants. Die Partikelgröße der Proppants kann z.B. durch Siebung des verwendeten Materials genau eingestellt werden. Je besser die Blasengröße des Schaumes und deren Verteilung an die Partikelgröße und Dichte des Stützmittels eingestellt werden kann, desto besser ist das Tragvermögen des Schaumes und eine vorzeitige Sedimentation des Proppants kann unterbunden werden.

Der Erfindung liegt hiervon ausgehend die Aufgabe zugrunde, ein Verfahren der eingangs genannten Art dahingehend zu verbessern, dass die oben dargelegten Probleme hinsichtlich des Schaumes zumindest teilweise gemindert werden.

Diese Aufgabe wird durch ein Verfahren mit den Merkmalen des Anspruchs 1 gelöst. Vorteilhafte Ausgestaltungen des Verfahrens sind in den Unteransprüchen angegeben und werden nachfolgend beschrieben.

Gemäß Anspruch 1 sieht das erfindungsgemäße zur Förderung eines fluiden Mediums, insbesondere Erdöl und/oder Erdgas, aus einer Lagerstätte vor, dass ein Schaum erzeugt wird, wobei eine flüssige Phase sowie eine gasförmige Phase durch eine Düsenanordnung geführt werden, wobei die flüssige Phase in der Düsenanordnung mit einem Schwingungserreger in Schwingung versetzt wird, und wobei der erzeugte Schaum in die Lagerstätte injiziert wird und jenes Medium (z.B. Erdöl und/oder Erdgas) zumindest teilweise aus der Lagerstätte heraus gefördert wird.

Die Schwingungsanregung erfolgt bevorzugt so, dass die flüssige Phase in bzw. entgegen der Strömungsrichtung, in der die flüssige Phase aus der zugeordneten Düse ausgestoßen wird, zu einer Schwingung angeregt wird.

Bevorzugt ist vorgesehen, dass jene Schwingung bzw. die Erregerschwingung eine Ultraschall-Schwingung ist, d.h., eine Schwingung, deren Frequenz im Bereich zwischen 16 KHz und 200MHz liegt. Bevorzugt liegt die Frequenz im Bereich von 16KHz bis 100KHz, bevorzugt 16KHz bis 50KHz, bevorzugt 16KHz bis 30KHz.

Der Schwingungserreger kann z.B. zum Erzeugung der Erregerschwingung ein Piezoelement aufweisen. Der Schwingungserreger kann direkt auf die flüssige Phase einwirken oder über eine mechanische Kopplung.

Aufgrund der vorgenannten Schwingungsanregung der flüssigen Phase kann eine sehr enge Blasengrößenverteilung im Schaum erreicht werden, die bevorzugt kleiner als 10%, besonders bevorzugt kleiner als 5% ist, d.h. nur 10% bzw. 5% der Blasen eine Größe aufweisen, die außerhalb des gewünschten Wertes liegen.

Der Hintergrund einer derartigen monomodalen Verteilung des Blasendurchmessers (auch Lamellen- oder Zellendurchmesser genannt) des erzeugten Schaumes basiert dabei auf dem Prinzip, dass ein laminaren Strahl einer flüssigen Phase, der durch eine Düse mit geeignetem Innendurchmesser gegeben wird, durch eine überlagerte mechanische Schwingung in gleichgroße Tröpfchen zerteilt wird. Die Schwingung liegt dabei bevorzugt in Resonanz mit der sogenannten Plateau-Rayleigh-Instabilität. Weiterhin verhält es sich so, dass eine Erhöhung der Amplitude der erregenden Schwingung sowie eine Verringerung der Durchflussrate die Dichte des Schaums erhöht. Weiterhin verringert eine Erhöhung der Amplitude die Zellengröße und verengt deren Verteilung.

Gemäß einer Ausführungsform der Erfindung ist vorgesehen, dass die Düsenanordnung zumindest eine Koaxialdüse aufweist, wobei die Koaxialdüse eine innere Düse aufweist, über die die gasförmige Phase ausgegeben wird, sowie eine koaxial zur inneren Düse angeordnete äußere Düse, die die innere Düse umgreift und über die die flüssige Phase ausgegeben wird.

Bevorzugt weist die Düsenanordnung eine Mehrzahl derartiger Koaxialdüsen auf, die bevorzugt (in zwei Dimensionen) in einer Ebene nebeneinander angeordnet sind und von einer Platte abragen, so dass eine Mehrfachdüsenplatte ausgebildet wird.

Wie eingangs bereits dargelegt, haben herkömmlicherweise injizierte gasförmige Flutmedien im Vergleich zu den in der Lagerstätte enthaltenen Fluiden, wie z.B. Rohöl oder Kondensat, eine deutlich niedrigere Viskosität, was dazu führt, dass es aufgrund des sogenannten "Viscous Fingering" zu einer ungleichmäßigen Penetration in der Lagerstätte und weiterhin zu einem schnellen Durchbruch des in eine Injektionsbohrung injizierten Flutmediums zu einer Produktionsbohrung kommt. Der erfindungsgemäß erzeugte Schaum weist dahingegen eine höhere Viskosität auf, so dass ein schneller Durchbruch zur Förderbohrung verhindert wird. Weiterhin weist der Schaum die besagte monomodale Verteilung von Zellendurchmessern auf, die entsprechend der Permeabilität der Lagerstätte eingestellt ist, so dass der Schaum mit vergleichsweise geringerem Druck in die Lagerstätte verpresst werden kann.

Gemäß einer Ausführungsform der Erfindung ist vorgesehen, dass der Schaum ohne Stützmittel in die Lagerstätte injiziert wird. Der Schaum kann dabei alleine oder aber auch alternierend mit Wasser oder anderen (z.B. wasserbasierten) Fluiden (in sogenannten "slugs") in die Lagerstätte gepumpt werden.

Durch die gezielte Anpassung der Blasengröße und deren Verteilung ist es hierbei möglich, den Injektionswiderstand des Schaumes in die Lagerstätte zu reduzieren und damit den Energiebedarf für den Gesamtprozess zu optimieren.

Gemäß einer weiteren Ausführungsform der Erfindung ist vorgesehen, dass dem Schaum vor der Injektion in die Lagerstätte ein Stützmittel zugefügt wird (hierbei wird bevorzugt wie bereits oben beschrieben verfahren), wobei der Schaum zusammen mit dem Stützmittel so in die Lagerstätte gepumpt wird, dass hydraulisch Risse in der Lagerstätte erzeugt werden. Das zu fördernde Medium (z.B. Erdöl und/oder Erdgas) wird dann zumindest teilweise durch jene Risse hindurch aus der Lagerstätte heraus gefördert.

Aufgrund der erfindungsgemäß erreichbaren, vergleichsweise engen Blasengrößenverteilung auf (in der Regel <10% oder sogar <5%, siehe oben) wird die Einstellung eines definierten Schaumes mit einer definierten Blasengröße und Blasengrößenverteilung passend zu den Eigenschaften (Dichte und Partikelgröße) des Proppants bzw. Stützmittels ermöglicht, um dieses optimal im Schaum in der Schwebe zu halten und damit einer Sedimentation entgegenzuwirken.

Gemäß einer bevorzugten Ausführungsform der Erfindung ist vorgesehen, dass die bei der Schaumherstellung verwendete gasförmige Phase Erdgas ist bzw. aufweist. Gemäß einer weiteren bevorzugten Ausführungsform der Erfindung ist vorgesehen, dass die bei der Schaumherstellung verwendete gasförmige Phase CO₂ ist bzw. CO₂ aufweist.

Gemäß einer Ausführungsform der Erfindung ist vorgesehen, dass das CO₂ aus einem Rauchgasstrom abgetrennt wird, der durch Verbrennung eines Einsatzstoffes erzeugt wird, und/oder dass das CO₂ erzeugt wird, indem ein Synthesegasstrom erzeugt wird, einer Wassergas-Shift-Reaktion unterzogen wird und im Synthesegasstrom enthaltenes CO₂ abgetrennt wird.

Vorzugsweise wird der Synthesegasstrom durch Dampfreformierung, partielle Oxidation oder autotherme Reformierung eines kohlen- und/oder kohlenwasserstoffhaltigen Einsatzes erzeugt.

Die Abtrennung des CO₂ aus einem durch Verbrennung eines Einsatzstoffes erzeugten Rauchgases wird auch als Post-Combustion Capture bezeichnet. Hierbei wird bevorzugt das Rauchgas zum Abtrennen des CO₂ aus dem Rauchgas mit einem beispielsweise aminbasierten Lösungsmittel in einer Absorptionskolonne gewaschen, wobei es von dem Lösungsmittel absorbiert wird. Hiernach wird das CO₂ vom beladenen Lösungsmittel in einer Desorptionskolonne bei erhöhter Temperatur abgetrennt und das regenerierte Lösungsmittel wird in die Absorptionskolonne zurückgeführt. Andere Waschprozesse und Waschmittel bzw. Abtrennverfahren zum Abtrennen von CO₂ sind auch denkbar.

Bei einem Waschprozess der vorgenannten Art kann mit Vorteil CO₂ mit einem hinreichend geringen Anteil an O₂ gewonnen werden. Ggf. kann das Rauchgas vor dem Abtrennen des CO₂ zur Entfernung von NOₓ, SOₓ in bekannter Weise vorgereinigt werden.

Die alternative Bereitstellung von CO₂ durch Erzeugen eines CO- und H₂-haltigen Synthesegasstromes und Abtrennen von CO₂ vom konvertierten Synthesegasstrom (d.h. nach einer Wassergas-Shift-Reaktion) wird auch als Pre-Combustion Capture bezeichnet (auch bekannt in Form von IGCC für Integrated Gasification Combined Cycle). Hierbei wird zunächst ein CO- und H₂-haltiges Synthesegas erzeugt, das z.B. aus kohlenwasserstoffhaltigen Einsätzen durch Dampfreformierung gemäß

CₓH_{y} + xH₂O ↔ xCO + (x+y/2)H₂ (1),

partielle Oxidation (POX) gemäß

CₓH_{y} + (x/2)O₂ ↔ xCO + (y/2)H₂ (2)

oder autotherme Reformierung erhalten werden kann, bei der insbesondere die benötigte Wärme durch die partielle Oxidation (2) mittels Luft oder Sauerstoff erzeugt wird und die endotherme Reaktion (1) im Reaktor an einem Katalysator stromab einer POX-Zone erfolgt.

Bevorzugt wird bei der besagten Wassergas-Shift-Reaktion CO zu CO₂ umgesetzt, und zwar gemäß CO + H₂O ↔ CO₂ + H₂. Im Synthesegasstrom hiernach enthaltenes CO₂ wird wiederum aus dem Synthesegasstrom abgetrennt (ggf. nach Vorreinigung zum Abtrennen von NOₓ und SOₓ), wobei der (ggf. vorgereinigte) Synthesegasstrom zum Abtrennen von CO₂ vorzugsweise mit einem insbesondere organischen Waschmittel, wie z.B. Methanol, gewaschen wird (z.B. Rectisolwäsche). Ebenfalls denkbar ist eine Wäsche mit einem beispielsweise aminbasierten Lösungsmittel (siehe oben).

Besonders bevorzugt erfolgt die Erzeugung des Rauchgases und die Abtrennung des CO₂ aus dem Rauchgas über Tage am Ort der Lagerstätte. Auch bei einem Pre-Combustion Capture wird vorzugsweise die Erzeugung des Synthesegases und die Abtrennung des CO₂ aus dem konvertierten Synthesegas vor Ort vorgenommen.

Das so gewonnene CO₂ kann zur Erzeugung des Schaumes (siehe oben) verwendet werden.

Weiterhin wird bevorzugt die Herstellung des CO₂ (und ggf. die begleitende Erzeugung von elektrischem Strom) auf einem Schwimmkörper vorgenommen (z.B. Schiff, Kahn oder Plattform). Bevorzugt erfolgt die Co-Erzeugung von CO₂ und Strom on-site, d.h. am Ort der Lagerstätte. Hierzu kann bei dem erfindungsgemäßen Verfahren obertägig am Ort der Lagerstätte bei der Verbrennung (Erzeugung des Rauchgases) erzeugter Dampf zur Stromerzeugung verwendet werden bzw. weitere Bestandteile des Synthesegases, wie z.B. Wasserstoff, zur Stromerzeugung verfeuert werden. Weiterhin kann das zur Schaumerzeugung verwendete CO₂ gemäß einer weiteren Ausführungsform der Erfindung auch aus anderen Quellen oder Prozessströmen stammen. Hierbei kann es sich um fossile CO2-Quellen handeln (z.B. natürliches CO2 aus Lagerstätten) oder andere durch Carbon Capture zugängliche CO₂-Ströme.

Gemäß einer weiteren Ausführungsform der Erfindung ist vorgesehen, dass die gasförmige Phase Stickstoff (N₂) ist oder N₂ aufweist.

Gemäß einer bevorzugten Ausführungsform der Erfindung wird dabei jener N₂ durch kryogene Luftzerlegung und/oder durch Druckwechseladsorption (z.B. Luft als Einsatz) hergestellt wird.

Eine derartige kryogene Zerlegung von Luft zur Erzeugung von N₂ kann z.B. in einer Rektifikationskolonne in bekannter Weise vorgenommen werden. Bei der Druckwechseladsorption zur Erzeugung von Sauerstoff wird z.B. Luft durch zumindest einen Adsorber geleitet, wobei der in der Luft enthaltene Sauerstoff bei hohem Druck in einer Adsorptionsphase am Adsorbens des Adsorbers adsorbiert und der verbleibende Stickstoff über Kopf abgezogen wird. Bei der anschließenden Regeneration des mit Sauerstoff beladenen Adsorbens wird Sauerstoff bei niedrigerem Druck desorbiert. Die Verwendung der kryogenen Luftzerlegung ist vorteilhaft, da hiermit vergleichsweise kostengünstig Stickstoffreinheiten mit einem Rest-O₂ Gehalt unterhalb von 10ppm erzeugt werden können. Die Druckwechseladsorption ist besonders dann von Interesse, wenn lokal, d.h., am Ort der Lagerstätte, sehr preiswerte Energie zur Verfügung steht. Die Druckwechseladsorption bietet dabei den Vorteil, dass sie in einer kleinen und vergleichsweise einfach zu reallokierenden Einheit darstellbar ist. Damit besteht der Vorteil, dass die Druckwechseladsorption auch zur on-site Erzeugung von Stickstoff bei Fraccing-Verfahren eingesetzt werden kann. Bevorzugt wird daher in einer Variante der Erfindung die Druckwechseladsorption zur Stickstofferzeugung obertägig am Ort der Lagerstätte durchgeführt.

Grundsätzlich kann der N₂ on-site, d.h., am Ort der Lagerstätte oder hiervon entfernt hergestellt werden. Weiterhin kann die N₂-Herstellung, insbesondere vor Ort, zusammen mit einer Energieerzeugung erfolgen. Weiterhin besteht die Möglichkeit, den N₂ (und ggf. elektrischen Strom) auf einem Schwimmkörper (z.B. Schiff, Kahn oder Plattform) zu erzeugen.

Gemäß einer weiteren Ausführungsform der Erfindung kann das N₂ auch aus anderen Quellen stammen. Hierbei kann es sich insbesondere um fossiles N₂ aus Lagerstätten handeln. Weiterhin können zur Erzeugung des N₂ andere Verfahren, wie z.B. Membranverfahren, verwendet werden, bei denen N₂ mit Hilfe von Membranen aus einem Strom abgetrennt wird. Eine kryogene Erzeugung von N₂ ist insbesondere bei Langzeitanwendungen, wie z.B. EOR, bevorzugt.

Die einzelnen, oben angegebenen Verfahren zur Herstellung von CO₂ können natürlich auch kombiniert werden, d.h., das verwendete CO₂ kann mittels mehrere, unterschiedlicher Verfahren erzeugt werden bzw. kann aus unterschiedlichen Quellen stammen. Gleiches gilt für das verwendete N₂.

Bei der Injektion von Gasen in Lagerstätte, auch beim Fraccing, ist der Restsauerstoffgehalt des verwendeten CO₂ bzw. N₂ relevant. Ist Sauerstoff vorhanden, kann es zur Korrosion von Anlagenteilen kommen, so dass Korrosionsinhibitoren verwendet werden müssen bzw. eine entsprechende Wartung anfällt, was die Kosten steigert. Die Gegenwart von O₂ begünstigt die Entwicklung von Bakterien, was zu einer Verstopfung des Porenraumes einer Lagerstätte führen kann und damit die Permeabilität reduziert. Weiterhin können O₂ und H₂S elementaren Schwefel bilden, der ebenfalls die Lagerstätte/Bohrungen verstopfen kann. Weiterhin kann durch Oxidation in der Lagerstätte (z.B. im Formationswasser) enthaltendes Fe²⁺ zu Fe³⁺ oxidieren, das dann im Erdöl enthaltene Asphaltene vernetzen könnte, was die Bildung von Asphalten-Sludges (Vergelen des Asphaltes) zur Folge hat, die die Lagerstätte schädigen könnten. Auch Ausfällungen von Eisenoxiden können die Lagerstätte irreversibel schädigen. Weiterhin kann durch den Sauerstoff Kompressorenschmieröl oxidiert werden, was das Risiko eines Versagens der bei der Förderung verwendeten Kompressoren erhöht. Schließlich kann bei erhöhtem Druck und Temperatur O₂ mit N₂ zu NOₓ reagieren, das bei Kontakt mit Wasser hochkorrosive Salpetersäure bildet. Insgesamt kann also die Produktivität der Förderbohrung unter einem zu hohem Sauerstoffeintrag stark leiden.

Die vorgenannten Nachteile können jedoch bei einer erfindungsgemäßen Erzeugung von CO₂ bzw. N₂ für den zu erzeugenden Schaum vermieden werden, da hierbei CO₂ bzw. N₂ mit einer äußerst geringen O₂-Verunreinigung herstellbar ist (siehe oben).

Gemäß einer Ausführungsform der vorliegenden Erfindung ist diesbezüglich vorgesehen, dass das erfindungsgemäß erzeugte CO₂ bzw. N₂ einen Restsauerstoffgehalt von kleiner 1%, bevorzugt kleiner 1000 ppm, bevorzugt kleiner 100 ppm, besonders bevorzugt kleiner 10 ppm aufweist.

Im Hinblick auf die Schaumerzeugung ist gemäß einer Ausführungsform der Erfindung vorgesehen, dass die flüssige Phase Wasser aufweist sowie zumindest ein Tensid.

Bevorzugt ist gemäß einer Ausführungsform der Erfindung vorgesehen, dass der Schaum Stickstoff und/oder CO₂ mit einem Volumenanteil von mindestens 40% umfasst, wobei bevorzugt Stickstoff und/oder CO₂ bevorzugt einen Volumenanteil von 60% bis 95% und besonders bevorzugt einen Volumenanteil von 90% bis 95% aufweist. Der Rest des Schaumes wird bevorzugt durch die flüssige Phase, wie z.B. eine Tensidlösung, ausgebildet. Denkbar ist z.B. Zusammensetzung des Schaumes aus 75.000 m³ Wasser als flüssiger Phase, umfassend 400 Tonnen Tenside, so dass eine 0,5%-ige Lösung von Tensid entsteht; zusammen mit 75.000.000 Nm³ Gas. Die Mengen können natürlich skaliert werden. Der Schaum wird ggf. unter Druck erzeugt (z.B. zwischen 20 und 400 bar, bei Fraccing sogar im Bereich von 1100 bar), wobei sich die obige Rezeptur entsprechend ändert. Bei höheren Drücken wird die Blasengröße kleiner, damit muß das Verhältnis Fluid zu Gas entspechend nach unten angepasst werden, um dieselbe Schaumqualität zu erzielen (mehr Gas).

Gemäß einer Ausführungsform der Erfindung handelt es sich bei der flüssigen Phase bevorzugt um Wasser. Zur Schaumbildung kann die flüssige Phase neben Wasser wenigstens ein Tensid aufweisen. Die Viskosität des Schaums beträgt bevorzugt mindestens 1 Ns/m2 bzw. 1 cps (Centipoise), was der Viskosität von Wasser entspricht. Vorzugsweise ist die Viskosität des injizierten Schaums so groß wie die Viskosität des zu fördernden Mediums. Durch die Angleichung der Viskosität des Schaumes an die Viskosität des zu fördernden Mediums, wie zum Beispiel die Viskosität von Öl, besteht eine geringere Gefahr der Umspülung des zu fördernden Mediums, dem sogenannten "Fingering" (siehe oben). Somit besteht z.B. bei Ölförderung eine geringere Gefahr des Durchbruchs (frühzeitigen Erreichens) des Schaumes in eine Produktionsbohrung (auch Förderbohrung genannt), durch die das Öl produziert bzw. gefördert wird.

Die durchschnittliche Lamellen-, Blasen- oder Zellengröße des Schaums ist vorzugsweise derart ausgeführt, dass der Schaum problemlos und effizient in die Lagerstätte eingebracht werden kann.

Der Schaum kann unter Verwendung von Schäumungsmitteln und/oder Schaumstabilisatoren erzeugt werden. Verwendbare Schäumungsmittel sind dem Fachmann bekannt, wie zum Beispiel: Betaine z.B. Laurylbetainie sowie höherwertige C-Ketten, ggf Cx-Seitenketten, kationische Tenside, Alpha-Olefinsulfonate mit Kettenlängen größer C10 bis C30, Pentaethylenglycolmonododecylether, Natrium Lauryl Äther Sulfat (SLES), Natriumlaurylsulfat (auch bekannt als Natriumdodecylsulfat oder SDS) und Ammoniumlaurylsulfat (ALS), Alkylpolyglucoside. Ein verwendbarer Schaumstabilisator ist zum Beispiel Dodecanol, es können auch niedermolekulare Polymere verwendet werden.

Das Tensid ist Bestandteil der Lamellen (bzw. Zellen oder Blasen) des Schaumes und somit der flüssigen Phase des Schaumes. Die einzusetzenden Tenside sind dabei Substanzen, die die Grenzflächenspannung zwischen zwei Phasen herabsetzen. Insbesondere bewirken die Tenside dabei eine Reduzierung der Grenzflächenspannung zwischen Stickstoff/CO₂ und der flüssigen Phase, z.B. Wasser, des Schaumes.

Als Tenside können zum Beispiel zum Einsatz kommen: Substanzen, die die Grenzflächenspannung zwischen zwei Phasen herabsetzen oder die die Oberflächenspannung einer Flüssigkeit senken und die Bildung von Dispersionen ermöglichen oder unterstützen bzw. als Lösungsvermittler wirken, wie z.B. Alkoholethersulfate, Acylsarkosinate, Alkylbenzolsulfonate, Alkylnaphthalensulfonate, Fettalkoholethoxylate, Oxoalkoholethoxylate, Alkylethoxylate, Alkylphenolethoxylate, Fettamin- und Fettamidethoxylate, Alkylpolyglucoside, Oxoalkoholethoxylate und Guerbetalkoholalkoxylate. Außerdem können verwendet werden: Alkylethersulfonate, Betaine, Alkenylsulfonate, Alkylglykol, Alkoholalkoxylate, Sulfosuccinate, Alkyletherphosphate. Einsetzbare Co-Tenside sind z.B. iC90-Glykol und iC10-Glykol. Einsetzbare Co-Solventen sind z.B. 2-Butanol und Butylglykol.

Die Stabilisation des Schaumes kann zusätzlich mit Hilfe dem Fachmann bekannter Polymere zur Erhöhung der Viskosität der wässrigen Phase erfolgen, wie z.B. Polymere und/oder Copolymere auf Basis von Acylamid und Derivate sowie Biopolymeren wie z.B. Xanthan Gum, Schizophyllan, Guar Gum oder Scleroglucan. Auch kann die Stabilisation des Schaumes über den Zusatz von Partikeln, vorzugsweise Mikropartikeln erfolgen.

Weitere Einzelheiten und Vorteile der Erfindung sollen durch die nachfolgende Figurenbeschreibung eines Ausführungsbeispiels anhand der Figur erläutert werden.

Es zeigt:
- Fig. 1: eine Düsenanordnung zur Schaumerzeugung unter Schwingungsanregung; und
- Fig. 2: eine schematische Darstellung der Förderung von Erdöl und/oder Erdgas unter Verwendung eines erfindungsgemäß hergestellten Schaumes.

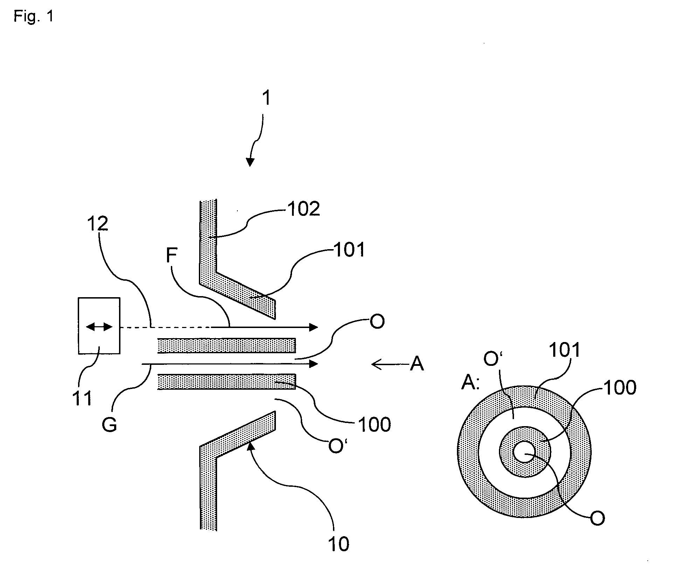

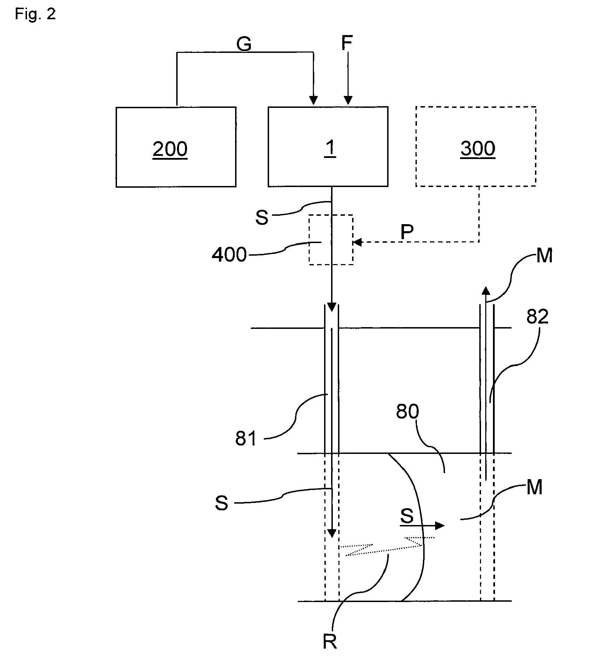

Figur 1 zeigt eine erfindungsgemäße Düsenanordnung 1 zur Erzeugung eines Schaumes S, der anschließend zur Unterstützung der Förderung eines Mediums M, wie z.B. Erdöl oder Erdgas, aus einer Lagerstätte 80 (vgl. Fig. 2) verwendet werden soll.

Hierzu wird eine flüssige Phase F, z.B. eine wässrige Phase, die z.B. eine Tensid und ggf. weitere Stoffe aufweist (vgl. oben), zusammen mit einer gasförmigen Phase G, bei der es sich um N₂ und/oder CO₂ handeln kann, durch eine Mehrzahl an Koaxialdüsen 10 gegeben. Die Koaxialdüsen 10 weisen jeweils eine äußere Düse 101 auf, die jeweils eine innere Düse 100 der jeweiligen Koaxialdüse 10 umschließt, so dass die beiden Düsen 100, 101 einer Koaxialdüse 10 jeweils koaxial zueinander angeordnet sind. Die jeweilige äußere Düse 101 weist entsprechend eine ringförmige Öffnung O' zur Ausgabe der flüssigen Phase F auf, die eine Öffnung O der jeweils zugeordneten inneren Düse 100 umläuft, aus der jeweils die gasförmige Phase G ausgegeben wird (vgl. Draufsicht gemäß Detail A der Figur 1). Die Koaxialdüsen 10 stehen bevorzugt von einer Düsenplatte 102 ab, so dass über die gesamte Fläche jener Düsenplatte 102 Schaum S aus den Koaxialdüsen 10 gedrückt werden kann.

Die flüssige Phase F wird mittels eines oder mehrerer Schwingungserreger 11 bevorzugt in bzw. entgegen der Strömungsrichtung in den äußeren Düsen 101 zu Ultraschallschwingungen angeregt. Hierzu wird die Erregerschwingung des jeweiligen Schwingungserzeugers 11 mittels einer geeigneten Kopplung 12 auf die in der jeweiligen äußeren Düse 101 strömende flüssige Phase F übertragen. Hierbei kann es sich um eine direkte Kopplung 12 handeln, bei der der Schwingungserreger 11 selbst unmittelbar auf die flüssige Phase F einwirkt. Weiterhin besteht die Möglichkeit, dass der Schwingungserreger 11 über einen Teil der Düsenanordnung 1 z.B. eine Wandung der äußeren Düse 101 auf die flüssige Phase F einwirkt, so dass eine mittelbare Kopplung 12 zustande kommt.

Der zugrundliegende Mechanismus der Schaumerzeugung liegt nun darin, dass durch die besagte Schwingung/Oszillation die aus den äußeren Düsen 101 austretenden Flüssigkeitsstrahlen F in einzelne Segmente bzw. in gleichmäßige Zylinder eingeschnürt und damit einheitlich zerteilt werden. Aufgrund der Oberflächenspannung und der ausgegebenen gasförmigen Phase G bilden sich dann aus den Zylindern Lamellen/Zellen/Blasen aus flüssiger Phase F bzw. der zu erzeugende Schaum S.

Hierdurch lassen sich monomodale Gasblasen bzw. Schäume erzeugen mit einer sehr engen Blasengrößenverteilung (siehe oben). Die monomodale Verteilung wird durch eine gleichmäßige, laminare Strömung der flüssigen Phase F begünstigt. Amplitude und Frequenz der eingebrachten Schwingung sind in gewissen Grenzen variierbar, müssen jedoch für gleichmäßige Produktionen konstant gehalten werden. Der Gasstrom G ist dem Flüssigkeitsstrom F entsprechend anzupassen.

Figur 2 zeigt eine schematische Darstellung einer Anlage 1 zur Förderung von Erdöl und/oder Erdgas M unter Einsatz des erfindungsgemäß erzeugten Schaumes S.

Gemäß einem ersten Ausführungsbeispiel handelt es sich bei der gasförmigen Phase G, die zur Erzeugung des Schaumes S verwendet wird, um CO₂, das in einer entsprechenden Einrichtung 200 erzeugt wird. Das CO₂ kann dabei durch Verbrennung eines z.B. kohlenstoff- oder kohlenwasserstoffhaltigen Einsatzes an Luft (als Oxidationsmittel) am Ort der Lagerstätte 80 (z.B. innerhalb der Anlagengrenze) erzeugt werden (sogenanntes Post-Combustion Capture) oder auch per Pipeline aus einer alternativen CO₂-Quelle (z.B. Kraftwerk) bereitgestellt werden. Bei der Verbrennung wird ein Rauchgasstrom erzeugt und einer CO₂-Abtrennung unterzogen, die z.B. eine Wäsche des CO₂ mit einem beispielsweise aminhaltigen Waschmittel umfasst. Hiernach wird das abgetrennte CO₂ weiter aufgearbeitet und dabei insbesondere komprimiert, getrocknet und weiter gereinigt. Bei der besagten Verbrennung erzeugter Dampf kann des Weiteren zur on-site Stromerzeugung 20 verwendet werden.

Gemäß einem weiteren Ausführungsbeispiel handelt es sich bei der gasförmigen Phase G um CO₂, das erzeugt wird, indem ein CO- und H₂-haltiger Synthesegasstromes erzeugt wird und darin enthaltenes CO₂ vom konvertierten Synthesegasstrom (Wassergas-Shift-Reaktion) abgetrennt wird 200 (sogenannte Pre-Combustion Capture).

Gemäß einem weiteren Ausführungsbeispiel handelt es sich bei der gasförmigen Phase um Stickstoff, der durch kryogene Zerlegung 200 von Luft erzeugt wird.

Gemäß einer weiteren Ausführungsform wird der Stickstoff durch Druckwechseladsorption 200 mit Luft als Einsatz erzeugt.

Das wie vorstehend erhaltene CO₂ bzw. N₂ kann nun zur Erzeugung des Schaumes S mittels einer Düsenanordnung 1 verwendet werden, wobei der Schaum S dann über eine Injektionsbohrung 81 in die Lagerstätte 80 eingebracht wird. Dort wird das zu fördernde Medium M durch den Schaum S in Richtung einer Produktionsbohrung 82 verdrängt und/oder zusammen mit dem Schaum S ausgeschwemmt. Der Schaum S kann natürlich zusammen mit weiteren Flutmedien oder abwechselnd mit einem oder mehreren anderen Flutmedien in die Lagerstätte 80 eingebracht werden, um die Förderung des Mediums M zu unterstützen.

Gemäß einem weiteren Ausführungsbeispiel, das in der Figur 2 angedeutet ist, besteht weiterhin Möglichkeit, dem Schaum S zusätzlich obertätig ein Stützmittel P zuzufügen 300, wobei dieser Schaum S dann mittels einer optionalen Einrichtung zur hydraulischen Rissbildung 400 bei hohem Druck (z.B. 200bar bis 1100bar) in die Lagerstätte 80 gepresst wird, um dort Risse R zu erzeugen, durch die das zu fördernde Medium M gefördert wird (z.B. durch eine Injektionsbohrung 81, durch die auch der Schaum S injiziert wird oder ggf. durch eine entfernte Förderbohrung 82). Bei diesem auch als Fraccing bezeichneten Verfahren dient das Stützmittel P zum Offenhalten der erzeugten Risse R.

### Bezugszeichenliste

| 1 | Düsenanordnung bzw. Anlage zur Schaumerzeugung |
|---|---|
| 10 | Koaxialdüse |
| 11 | Schwingungserreger |
| 12 | Kopplung |
| 80 | Lagerstätte |
| 81 | Injektionsbohrung |
| 82 | Förderbohrung |
| 100 | Innendüse |
| 101 | Außendüse |
| 102 | Düsenplatte |
| 200 | Erzeugung CO₂ oder N₂ |
| 300 | Bereitstellung Stützmittel |
| 400 | Einrichtung zur hydraulischen Rissbildung |
| F | Flüssige Phase |
| G | Gasförmige Phase |
| O, O' | Öffnung |
| P | Stützmittel (Proppant) |
| M | Zu förderndes Medium (z.B. Erdöl, Erdgas) |
| R | Risse |
| S | Schaum |

## Patentansprüche

1. Verfahren zur Förderung eines fluiden Mediums (M), insbesondere Erdöl und/oder Erdgas, aus einer Lagerstätte (80), wobei ein Schaum (S) erzeugt wird, indem eine flüssige Phase (F) sowie eine gasförmige Phase (G) durch eine Düsenanordnung (1) geführt werden, wobei die flüssige Phase in der Düsenanordnung (1) mit einem Schwingungserreger (11) in Schwingung versetzt wird, und wobei der erzeugte Schaum (S) in die Lagerstätte (80) injiziert wird und jenes Medium (M) zumindest teilweise aus der Lagerstätte (80) heraus gefördert wird.

2. Verfahren nach Anspruch 1, **dadurch gekennzeichnet, dass** die Schwingung eine Ultraschall-Schwingung ist.

3. Verfahren nach Anspruch 1 oder 2, **dadurch gekennzeichnet, dass** die Düsenanordnung (1) zumindest eine Koaxialdüse (10) aufweist, wobei die Koaxialdüse (10) eine innere Düse (100) aufweist, über die die gasförmige Phase (G) ausgegeben wird, sowie eine koaxial zur inneren Düse (100) angeordnete äußere Düse (101), über die flüssige Phase (F) ausgegeben wird.

4. Verfahren nach Anspruch 3, **dadurch gekennzeichnet, dass** die Düsenordnung (1) eine Mehrzahl an Koaxialdüsen (10) aufweist.

5. Verfahren nach einem der vorhergehenden Ansprüche, **dadurch gekennzeichnet, dass** dem Schaum (S) vor der Injektion in die Lagerstätte (80) ein Stützmittel (P) zugefügt wird, wobei der Schaum (S) zusammen mit dem Stützmittel (P) so in die Lagerstätte (80) gepumpt wird, dass hydraulisch Risse (R) in der Lagerstätte (80) erzeugt werden, wobei das Medium (M) zumindest teilweise durch jene Risse (R) hindurch aus der Lagerstätte (80) gefördert wird.

6. Verfahren nach einem der vorhergehenden Ansprüche, **dadurch gekennzeichnet, dass** die gasförmige Phase Erdgas ist oder aufweist.

7. Verfahren nach einem der vorhergehenden Ansprüche, **dadurch gekennzeichnet, dass** die gasförmige Phase CO₂ ist oder CO₂ aufweist.

8. Verfahren nach Anspruch 7, **dadurch gekennzeichnet, dass** das CO₂ aus einem Rauchgasstrom abgetrennt wird, der durch Verbrennung eines Einsatzstoffes erzeugt wird (200), und/oder dass das CO₂ erzeugt wird (200), indem ein Synthesegasstrom erzeugt wird, einer Wassergas-Shift-Reaktion unterzogen wird und im Synthesegasstrom enthaltenes CO₂ abgetrennt wird.

9. Verfahren nach Anspruch 7, **dadurch gekennzeichnet, dass** das CO₂ aus einer fossilen CO₂-Quelle stammt, insbesondere in Form von natürlichem CO₂ aus einer Lagerstätte.

10. Verfahren nach einem der Ansprüche 1 bis 5, **dadurch gekennzeichnet, dass** die gasförmige Phase N₂ ist oder N₂ aufweist.

11. Verfahren nach Anspruch 10, **dadurch gekennzeichnet, dass** das N₂ durch kryogene Luftzerlegung (200) und/oder durch Druckwechseladsorption (200) hergestellt wird, wobei insbesondere Luft als Einsatz verwendet wird.

12. Verfahren nach Anspruch 10, **dadurch gekennzeichnet, dass** das N₂ aus einer fossilen N₂-Quelle stammt, insbesondere in Form von natürlichem N₂ aus einer Lagerstätte.

13. Verfahren nach einem der vorhergehenden Ansprüche, **dadurch gekennzeichnet, dass** das CO₂ oder der N₂ einen Restsauerstoffgehalt von kleiner 3%, bevorzugt kleiner 1000 ppm, bevorzugt kleiner 100 ppm, besonders bevorzugt kleiner 10 ppm aufweist.

14. Verfahren nach einem der vorhergehenden Ansprüche, **dadurch gekennzeichnet, dass** die flüssige Phase (F) Wasser aufweist sowie zumindest ein Tensid.

15. Verfahren nach einem der vorhergehenden Ansprüche, **dadurch gekennzeichnet, dass** die flüssige oder wässrige Phase (F) zusätzlich ein Polymer und/oder Partikel, bevorzugt Nanopartikel, aufweist.

16. Verfahren nach einem der vorhergehenden Ansprüche, **dadurch gekennzeichnet, dass** der Schaum (S) N₂ und/oder CO₂ mit einem Volumenanteil von mindestens 40% umfasst, wobei bevorzugt N₂ und/oder CO₂ bevorzugt einen Volumenanteil von 60% bis 95% und besonders bevorzugt einen Volumenanteil von 90% bis 95% aufweist.
